# FASCICULE DE BREVET EUROPEEN

(11) **EP 0 675 654 B1**
(45) Date de publication et mention de la délivrance du brevet: **15.12.2004**
(21) Numéro de dépôt: 95410020.2
(22) Date de dépôt: 24.03.1995
(51) Int. Cl.: H04N 7/50

(54) **Circuit de compression d'image**
Schaltung zur Bildkompression
Image compression circuit

(30) Priorité: 30.03.1994 FR 9404144
(43) Date de publication de la demande: 04.10.1995
(73) Titulaire: STMicroelectronics S.A., 92120 Montrouge (FR)
(72) Inventeur: Bolton, Martin, F-38210 Tullins (FR)
(74) Mandataire: de Beaumont, Michel

(56) Documents cités:
- EP-A- 0 456 394
- EP-A- 0 493 136
- EP-A- 0 508 351
- ELEKTRONIK, vol. 41, no. 9, Novembre 1992 MUNCHEN,DE, pages 72-75, XP 000320229 M. QUEROL 'MPEG/H261-Videodecoder mit wenigen chips'
- ELECTRONICS ENGINEERING, vol. 6, no. 790, Octobre 1992 WOOLWICH,GB, pages 77-82, XP 000320428 'Technology focus: system solutions for MPEG imaging'
- ELECTRICAL DESIGN NEWS, vol. 37, no. 15, 20 Juillet 1992 NEWTON,USA, page 71 XP 000307545 G. LEGG 'MPEG video-decoder chips target low-cost applications'

## Description

La présente invention concerne les circuits de compression d'images mobiles, telles que les images de télévision, et plus particulièrement un circuit de compression conforme aux normes H261 et MPEG.

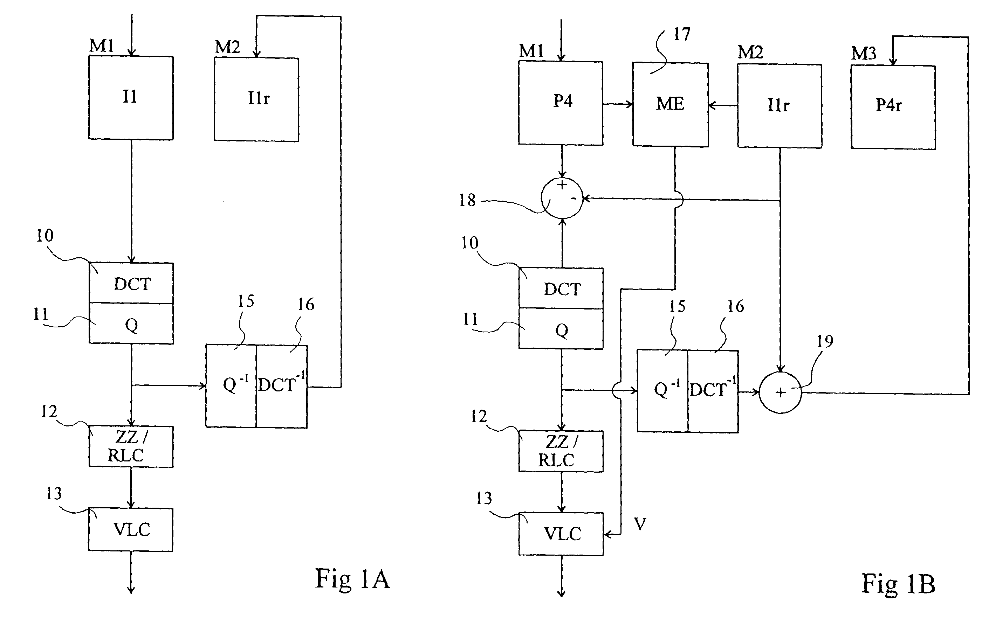

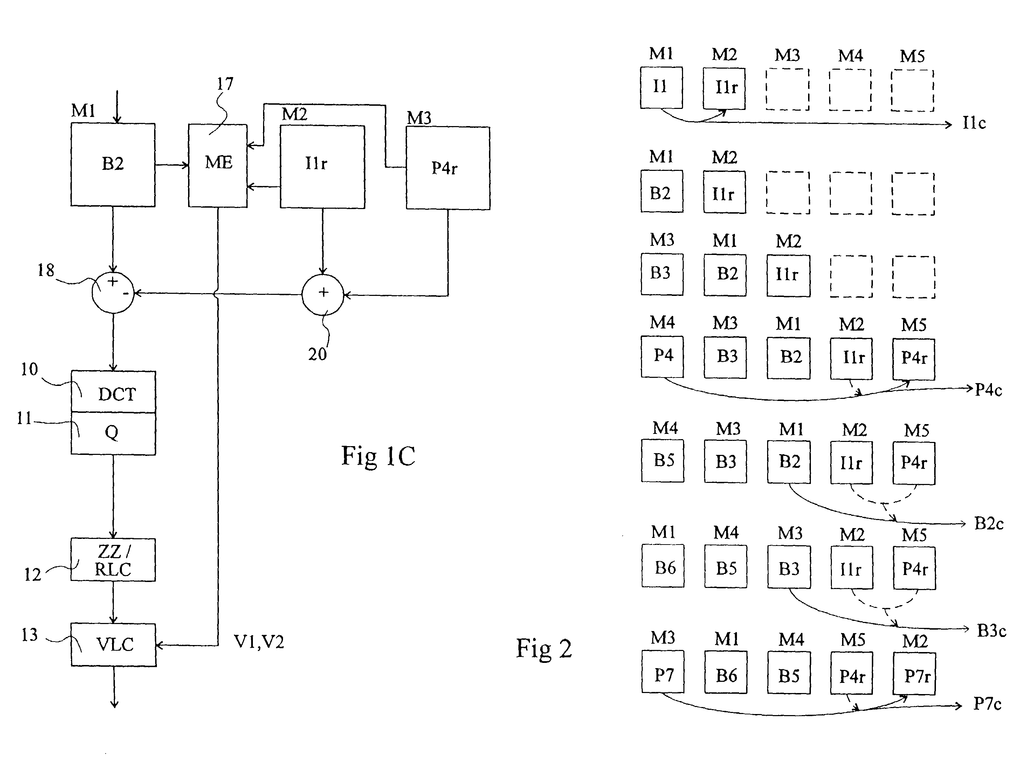

Les figures 1A à 1C illustrent schématiquement trois processus de compression d'image mobile d'après les normes H261 et MPEG. Selon les normes H261, les images peuvent être de type "intra" ou prédit. Selon les normes MPEG, les images peuvent en outre être de type bidirectionnel.

La figure 1A illustre une compression d'une image I1 de type intra. L'image I1 est stockée dans une zone mémoire M1 en attente d'être traitée. Les images doivent initialement être stockées dans une mémoire car elles arrivent ligne par ligne alors qu'elles doivent être traitées carré par carré, chaque carré ayant généralement une dimension de 16x16 pixels. Ainsi, avant de commencer à traiter l'image I1, il faut que la zone mémoire M1 soit remplie d'au moins 16 lignes.

Les pixels d'un carré de 16x16 sont rangés en ce que l'on appelle un "macrobloc". Un macrobloc comprend quatre blocs de luminance de 8x8 pixels et deux ou quatre blocs de chrominance de 8x8 pixels. Les traitements décrits ci-après s'effectuent par blocs de 8x8 pixels.

Les blocs de chaque macrobloc de l'image I1 subissent en 10 une transformée cosinus discrète (DCT) suivie en 11 d'une quantification. Une transformée cosinus discrète a la particularité de transformer une matrice (un bloc) de pixels en une matrice dont le coefficient du coin supérieur gauche a une valeur élevée, les autres coefficients décroissant rapidement au fur et à mesure qu'ils s'éloignent du coin supérieur gauche. La quantification consiste essentiellement à diviser les coefficients de la matrice ainsi transformée, ce qui a pour conséquence l'annulation d'un grand nombre de coefficients éloignés du coin supérieur gauche.

En 12, les matrices ayant subi la quantification subissent un balayage zigzag (ZZ) et un codage de chaînes de zéros (RLC). Le balayage zigzag a pour conséquence de fournir des suites de coefficients nuls consécutifs dont chacune est précédée d'un coefficient non nul. Le codage de chaînes de zéros consiste essentiellement à remplacer chaque suite par un couple de valeurs dont l'une représente un nombre de coefficients nuls consécutifs et l'autre le premier coefficient non nul suivant.

En 13, les couples de valeurs subissent un codage à longueur variable (VLC) qui consiste à remplacer des couples fréquents par des codes courts et des couples peu fréquents par des codes longs à l'aide de tables de correspondance définies par les normes H261 et MPEG. Les coefficients de quantification utilisés en 11, qui peuvent varier d'un macrobloc à l'autre, sont insérés au niveau du codage à longueur variable dans des en-têtes précédant les données comprimées correspondant aux macroblocs.

Des macroblocs d'une image intra servent le plus souvent à la compression de macroblocs d'une image ultérieure de type prédit ou bidirectionnel. Ainsi, le décodage d'une image prédite ou bidirectionnelle est susceptible d'être effectué à partir d'une image intra précédemment décodée. Cette image intra précédemment décodée ne correspond pas exactement à l'image réelle reçue initialement par le circuit de compression, car cette image initiale est altérée par la quantification en 11. Ainsi, la compression d'une image prédite ou bidirectionnelle est effectuée à partir d'une image intra reconstruite I1r plutôt qu'à partir de l'image intra réelle I1, de manière que le décodage soit réalisé dans les mêmes conditions que le codage.

L'image intra reconstruite I1r est stockée dans une zone mémoire M2 et elle est obtenue en faisant subir aux macroblocs fournis après la quantification 11 le traitement inverse de celui qu'ils viennent de subir, c'est-à-dire en 15 une quantification inverse suivie en 16 d'une transformée cosinus discrète inverse.

La figure 1B illustre la compression d'une image prédite P4. L'image prédite P4 est stockée dans une zone mémoire M1. Une image intra I1r précédemment traitée a été reconstruite dans une zone mémoire M2.

Le traitement des macroblocs de l'image prédite P4 est effectué à partir de macroblocs, appelés macroblocs prédicteurs, de l'image reconstruite I1r. Chaque macrobloc de l'image P4, macrobloc de référence, subit en 17 une estimation de mouvement (en général, l'estimation de mouvement est seulement effectuée avec les quatre blocs de luminance des macroblocs de référence). Cette estimation de mouvement consiste à rechercher dans une fenêtre de l'image I1r le macrobloc le plus proche du macrobloc de référence. Le macrobloc le plus proche trouvé dans la fenêtre est le macrobloc prédicteur. Sa position est déterminée par un vecteur de mouvement V obtenu par l'estimation de mouvement. Le macrobloc prédicteur est soustrait en 18 au macrobloc de référence couramment traité. Le macrobloc de différence résultant subit le traitement décrit en relation avec la figure 1A.

Comme les images intra, les images prédites servent à effectuer la compression d'autres images prédites et d'images bidirectionnelles. Pour cela, l'image prédite P4 est reconstruite dans une zone mémoire M3 par une quantification inverse en 15, une transformée cosinus discrète inverse en 16, et par l'addition en 19 du macrobloc prédicteur qui avait été soustrait en 18.

Le vecteur V fourni par l'estimation de mouvement en 17 est inséré dans un en-tête précédant les données fournies par le codage à longueur variable 13 du macrobloc couramment traité.

La figure 1C illustre la compression d'une image bidirectionnelle B2. Les images bidirectionnelles ne sont prévues que par les normes MPEG. Le traitement d'une image bidirectionnelle diffère du traitement d'une image prédite par le fait que l'estimation de mouvement en 17 consiste à trouver deux macroblocs prédicteurs dans respectivement deux images I1r et P4r précédemment reconstruites dans des zones mémoire M2 et M3. Les images I1r et P4r correspondent généralement respectivement à une image précédant et à une image succédant l'image bidirectionnelle couramment traitée.

On effectue en 20 la moyenne des deux macroblocs prédicteurs trouvés, moyenne qui est soustraite en 18 au macrobloc couramment traité.

L'image bidirectionnelle n'est pas reconstruite car elle ne sert pas à la compression d'une autre image.

L'estimation de mouvement en 17 fournit deux vecteurs V1 et V2 indiquant les positions respectives des deux macroblocs prédicteurs dans les images I1r et P4r. Les vecteurs V1 et V2 sont insérés dans un en-tête précédant les données fournies par le codage à longueur variable du macrobloc couramment traité.

Dans une image prédite, on tente de trouver un macrobloc prédicteur pour chaque macrobloc de référence. Toutefois, dans certains cas, le traitement du macrobloc de référence à l'aide du macrobloc prédicteur trouvé est susceptible de fournir un taux de compression moindre que le traitement à l'aide d'un macrobloc prédicteur non déplacé (vecteur de mouvement nul), ou même que le seul traitement intra du macrobloc de référence. Ainsi, selon ces cas, le traitement du macrobloc de référence est prédit avec le vecteur trouvé ou avec un vecteur nul, ou bien intra.

Dans une image bidirectionnelle, on tente de trouver deux macroblocs prédicteurs pour chaque macrobloc de référence. Pour chacun des deux macroblocs prédicteurs, on cherche, comme ci-dessus, quel traitement fournit le meilleur taux de compression. Ainsi, selon le cas, le macrobloc de référence subit un traitement bidirectionnel avec les deux vecteurs, un traitement prédit avec un seul des vecteurs, ou un traitement intra.

Ainsi, une image prédite et une image bidirectionnelle peuvent contenir des macroblocs de types différents. Le type d'un macrobloc est également une donnée insérée dans un en-tête au niveau du codage à longueur variable.

Selon les normes MPEG, les vecteurs de mouvement peuvent être définis avec une précision d'un demi-pixel. Pour chercher un macrobloc prédicteur à l'aide d'un vecteur non entier, on cherche d'abord le macrobloc prédicteur déterminé par la partie entière du vecteur, et on fait subir à ce macrobloc ce que l'on appelle un "filtrage demi-pixel" qui consiste à effectuer la moyenne entre le macrobloc et un macrobloc décalé d'un pixel vers le bas et/ou vers la droite, selon les valeurs entières ou non des deux composantes du vecteur. Selon la norme H261, les macroblocs prédicteurs peuvent ou non subir un filtrage passe-bas. Pour cela, on fournit en même temps que le vecteur, une information indiquant que l'on doit ou non effectuer le filtrage.

La succession de types (intra, prédit, bidirectionnel) est attribuée aux images de façon prédéfinie dans ce que l'on appelle un groupe d'images. Un groupe d'images commence généralement par une image intra. Il est courant, dans un groupe d'images, d'avoir une suite périodique à partir de la deuxième image, comprenant plusieurs images bidirectionnelles consécutives, suivies d'une image prédite, par exemple de la forme IBBPBBPBB... où la lettre I désigne une image intra, la lettre B une image bidirectionnelle, et la lettre P une image prédite. Le traitement de chaque image bidirectionnelle B est effectué à partir des macroblocs de l'image intra ou prédite précédente et des macroblocs de l'image prédite suivante.

Le nombre de zones mémoire M nécessaires au traitement d'un groupe d'images est égal à 3 plus le nombre maximal d'images bidirectionnelles consécutives dans le groupe. Dans l'exemple ci-dessus, il faut cinq zones mémoire M.

La figure 2 illustre un exemple d'utilisation de cinq zones mémoire M1 à M5 pour un groupe suite d'images I1 B2 B3 P4 B5 B6 P7... Les traitements de compression sont illustrés par des flèches en trait plein, et les traitements d'estimation de mouvement par des flèches en pointillés.

Initialement, on stocke l'image intra I1 dans une zone mémoire M1. L'image intra I1 est reconstruite (I1r) dans une zone mémoire M2 et fournie sous forme comprimée (I1c).

L'image bidirectionnelle suivante B2 est écrite dans la zone M1 à la place de l'image I1. Elle ne peut encore être traitée, car son traitement est effectué à partir des macroblocs de l'image P4 non encore arrivée.

L'image bidirectionnelle B3 est écrite dans une zone M3. Comme l'image B2, l'image B3 ne peut encore être traitée.

L'image prédite P4 est écrite dans une zone M4. Cette image P4 est traitée en utilisant l'image intra reconstruite I1r de la zone M2. L'image P4 est fournie sous forme comprimée (P4c) et reconstruite (P4r) dans une zone M5.

L'image bidirectionnelle B5 est écrite dans la zone M4 à la place de l'image P4. L'image bidirectionnelle B2, stockée dans la zone M1, peut enfin être traitée à partir des images reconstruites I1r et P4r et être fournie sous forme comprimée (B2c).

L'image bidirectionnelle B6 est écrite dans la zone M1 à la place de l'image bidirectionnelle B2. L'image bidirectionnelle B3 de la zone M3 est traitée à partir des images reconstruites I1r et P4r et fournie sous forme comprimée (B3c).

L'image prédite P7 est écrite dans la zone M3 à la place de l'image B3. L'image P7 est traitée à partir de l'image reconstruite P4r de la zone M5. L'image P7 est fournie sous forme comprimée et reconstruite (P7r) dans la zone M2 à la place de l'image I1r.

Le document EP-A-0 508 351 décrit un circuit de compensation de mouvement ayant une architecture classique, comportant une mémoire de trame dans laquelle est stockée une trame recomposée à partir d'une trame paire et d'une trame impaire. Ce circuit comporte une unité de codage qui ne peut traiter qu'un seul type d'images, soit des images selon la norme H261, soit des images selon la norme MPEG. En particulier ce document décrit un circuit de compression d'image comprenant une mémoire vidéo susceptible de stocker un nombre prédéterminé d'images, les cases de cette mémoire étant accessibles de façon aléatoire, une unité de codage reliée à la mémoire vidéo, la mémoire stockant une image reçue sur une entrée ainsi que des moyens pour lire dans la mémoire l'image par macroblocs afin de faire subir à ces macroblocs un traitement de transformée cosinus discrète et de quantification. II décrit aussi des moyens pour lire dans la mémoire des macroblocs prédicteurs d'une autre image et soustraire ces macroblocs prédicteurs aux macroblocs en cours de traitement et une unité d'estimation de mouvement susceptible d'être connectée à la mémoire et à l'unité de codage, pour recevoir un macrobloc en cours de traitement par l'unité de codage et une fenêtre entourant ce macrobloc dans une autre image, de manière à rechercher dans la fenêtre un macrobloc prédicteur le plus proche possible du macrobloc en cours de traitement, la différence de position entre le macrobloc prédicteur et le macrobloc en cours de traitement étant fournie comme vecteur d'estimation de mouvement pour indiquer l'emplacement du macrobloc prédicteur dans la mémoire.

L'article de Electronic Engineering d'octobre 1992, pages 77, 79, 80 et 82, fournit une comparaison entre les normes H261 et MPEG.

Un objet de la présente invention est de prévoir un circuit de compression d'image ayant une architecture pouvant s'adapter facilement à différents cas d'utilisation des normes H261 et MPEG.

Cet objet est atteint grâce à un circuit de compression d'image comprenant une mémoire vidéo susceptible de stocker un nombre prédéterminé d'images, les cases de cette mémoire étant accessibles de façon séquentielle par un bus vidéo et de façon aléatoire par un bus mémoire ; une unité de codage reliée à la mémoire vidéo par le bus mémoire pour stocker dans la mémoire une image reçue sur une entrée, lire une image par macroblocs afin de faire subir à ces macroblocs un traitement de transformée cosinus discrète, de quantification et de codage à longueur variable, et pour lire dans la mémoire des macroblocs prédicteurs d'une autre image et soustraire ces macroblocs prédicteurs aux macroblocs en cours de traitement ; et une unité d'estimation de mouvement susceptible d'être connectée au bus vidéo et à l'unité de codage, pour recevoir par le bus vidéo un macrobloc en cours de traitement par l'unité de codage et une fenêtre entourant ce macrobloc dans une autre image, de manière à rechercher dans la fenêtre un macrobloc prédicteur le plus proche possible du macrobloc en cours de traitement, la différence de position entre le macrobloc prédicteur et le macrobloc en cours de traitement étant fournie comme vecteur de mouvement à l'unité de codage pour indiquer l'emplacement du macrobloc prédicteur dans la mémoire.

Selon un mode de réalisation de la présente invention, l'unité de codage reçoit un signal de synchronisation d'image et est reliée à un microprocesseur interrompu par l'unité de codage à chaque arrivée d'une image indiquée par le signal de synchronisation, le microprocesseur étant programmé pour répondre à chaque interruption par la fourniture à l'unité de codage d'informations indiquant les zones de la mémoire où se trouvent respectivement l'image en cours de réception, l'image en cours de traitement et l'image où sont cherchés les macroblocs prédicteurs, et indiquant le départ du codage d'une nouvelle image.

Selon un mode de réalisation de la présente invention, le microprocesseur est programmé pour répondre aux interruptions de l'unité de codage en fournissant à l'unité de codage le type de l'image à traiter.

Selon un mode de réalisation de la présente invention, l'unité d'estimation de mouvement fournit à l'unité de codage une décision indiquant si le macrobloc en cours de traitement doit ou non être traité par soustraction d'un macrobloc prédicteur et si le vecteur de mouvement doit ou non être utilisé.

Selon un mode de réalisation de la présente invention, l'unité d'estimation de mouvement est reliée au microprocesseur pour recevoir de celui-ci des critères permettant d'établir les conditions dans lesquelles ladite décision est fournie par l'unité d'estimation de mouvement à l'unité de codage.

Ces objets, caractéristiques et avantages ainsi que d'autres de la présente invention seront exposés en détail dans la description suivante de modes de réalisation particuliers, faite à titre non-limitatif à l'aide des figures jointes parmi lesquelles :
les figures 1A à 1C, précédemment décrites, illustrent trois traitements de compression d'image selon les normes H261 et MPEG ;
la figure 2 illustre une gestion de zones mémoire au cours de la compression d'une suite d'images ;
la figure 3 représente un mode de réalisation d'architecture de circuit de compression d'image selon l'invention ;
la figure 4 illustre le fonctionnement du circuit de compression de la figure 3 dans la compression d'un exemple de groupe d'images ;
la figure 5 représente un mode de réalisation d'unité de codage du circuit de compression de la figure 3.

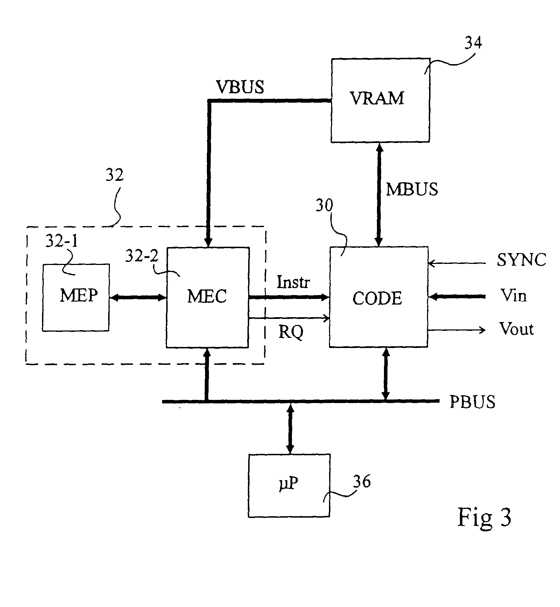

Le circuit de la figure 3 comprend une unité de codage 30 recevant des instructions d'une unité d'estimation de mouvement 32. Une mémoire vidéo 34 est reliée à l'unité de codage 30 par un bus mémoire MBUS et à l'unité d'estimation de mouvement 32 par un bus vidéo VBUS.

Une mémoire vidéo est une mémoire dynamique dont les cases sont accessibles aléatoirement par le bus MBUS et accessibles séquentiellement par le bus VBUS. Comme dans une mémoire dynamique classique, les cases d'une mémoire vidéo sont réparties par ce que l'on appelle des pages. Pour accéder à une case par le bus MBUS, on sélectionne d'abord la page qui contient cette case et ensuite la case. Lorsque l'on accède à la mémoire vidéo par le bus VBUS, on sélectionne une adresse de départ ; une longueur de page de cases commençant à cette adresse est alors disponible pour être lue séquentiellement par le bus VBUS.

L'unité de codage 30 est prévue pour gérer les accès à la mémoire 34, par les deux bus VBUS et MBUS, et pour effectuer toutes les opérations décrites en relation avec les figures 1A à 1C sauf l'estimation de mouvement 17. L'unité 30 reçoit les données à comprimer par un bus Vin, des signaux de synchronisation d'image SYNC, notamment le signal de synchronisation verticale indiquant chaque arrivée d'une nouvelle image. L'unité 30 fournit les images comprimées par une ligne série Vout.

L'unité d'estimation de mouvement 32 reçoit de la mémoire 34 chaque macrobloc traité par l'unité de codage 30, macrobloc de référence, et une fenêtre de recherche correspondante. Lorsqu'une estimation de mouvement est terminée, l'unité d'estimation de mouvement 32 fournit à l'unité de codage 30 une instruction. Chaque instruction fournit le ou les vecteurs de mouvement permettant de chercher dans la mémoire 34 le ou les macroblocs prédicteurs servant au codage du macrobloc de référence. Dans le cadre de la norme H261, les vecteurs sont fournis avec une information indiquant que l'on doit ou non effectuer un filtrage passe-bas des macroblocs prédicteurs correspondants.

L'unité de codage 30 requiert en outre une décision de traitement qui indique si le macrobloc de référence est ou non à traiter en intra et si le vecteur de mouvement est ou non utilisé. Pour cela, l'unité d'estimation de mouvement 32 vérifie, parmi le traitement prédit à l'aide du vecteur fourni, le traitement prédit à l'aide d'un vecteur nul, et le traitement intra du macrobloc de référence, lequel est susceptible de fournir le meilleur taux de compression. La décision résultant de cette vérification est fournie à l'unité de codage 30 dans l'instruction.

En outre, un circuit de compression d'image est souvent utilisé dans un système muni d'un microprocesseur 36. Ce microprocesseur est, par exemple, relié au circuit de compression d'image afin de stocker sur un disque dur ou une disquette les images en cours de compression. Selon un aspect de l'invention, ce microprocesseur 36 effectue également certaines tâches dans la compression d'image, décrites ci-après, telles que la gestion des zones mémoire décrite en relation avec la figure 2. Pour cela, l'unité de codage 30 est reliée à un bus PBUS du microprocesseur 36.

La structure de la figure 3 est facilement adaptable à un grand nombre de cas d'utilisation différents des normes H261 et MPEG. L'unité de codage 30 constitue le coeur du circuit de compression et sera prévue pour répondre à toutes les exigences des normes H261 et MPEG en ce qui concerne la compression de macroblocs à l'aide, le cas échéant, de vecteurs indiquant les positions de macroblocs prédicteurs. Ainsi, la structure de l'unité de codage 30 est fixe. Par contre, la structure de l'unité d'estimation de mouvement 32 et la taille de la mémoire vidéo 34 pourront varier respectivement selon la qualité recherchée de la compression et la taille des images traitées.

Dans certains cas, si l'on peut tolérer un débit élevé de données comprimées ou bien une qualité de compression moindre, l'unité d'estimation de mouvement 32 est omise. Toutes les images sont alors de type intra ou prédit avec vecteur nul et la mémoire vidéo 34 peut être remplacée par une mémoire dynamique simple. Le choix du type intra ou prédit avec vecteur nul est déterminé par le microprocesseur par la validation d'un bit de l'unité de codage 30.

Dans un autre cas, comme cela est représenté, l'unité d'estimation de mouvement 32 comprend un processeur d'estimation de mouvement 32-1, tel que le circuit STi3220 fabriqué par la société SGS-Thomson Microelectronics, et un contrôleur d'estimation de mouvement 32-2 servant d'interface entre le processeur d'estimation de mouvement 32-1 et l'unité de codage 30. La notice d'application du circuit STi3220 (SGS-THOMSON Microelectronics, Application Note, STI 3220, Motion Estimation Processor Codec, by Marc Quérol) explique comment concevoir un contrôleur d'estimation de mouvement 32-2.

Avantageusement, le contrôleur d'estimation de mouvement 32-2 comporte une unité de calcul qui exploite les résultats fournis par le processeur d'estimation de mouvement 32-1 pour prendre les décisions susmentionnées (vecteur utilisé ou non, macrobloc intra ou non). Les calculs à effectuer par une telle unité de calcul sont simples et l'homme du métier saura les réaliser à l'aide de comparateurs, additionneurs et multiplieurs. Un exemple de calcul pour prendre ces décisions, utilisant des critères ajustables par l'utilisateur, est décrit dans le Modèle 3 de Simulation Vidéo MPEG (SM3). Comme cela est représenté, le contrôleur d'estimation de mouvement 32-2 est connecté au bus PBUS, ce qui permet au microprocesseur d'écrire les critères dans des registres du contrôleur d'estimation de mouvement, périodiquement ou à la mise sous tension.

Pour traiter des images de télévision et de télévision haute définition, on utilise plusieurs processeurs d'estimation de mouvement du type STi3220 en parallèle. La notice susmentionnée explique également comment concevoir un contrôleur d'estimation de mouvement adapté.

Dans tous les cas susmentionnés, l'unité de codage 30 reste la même. L'unité d'estimation de mouvement 32 se borne à fournir les vecteurs de mouvement et les décisions de traitement du macrobloc de référence.

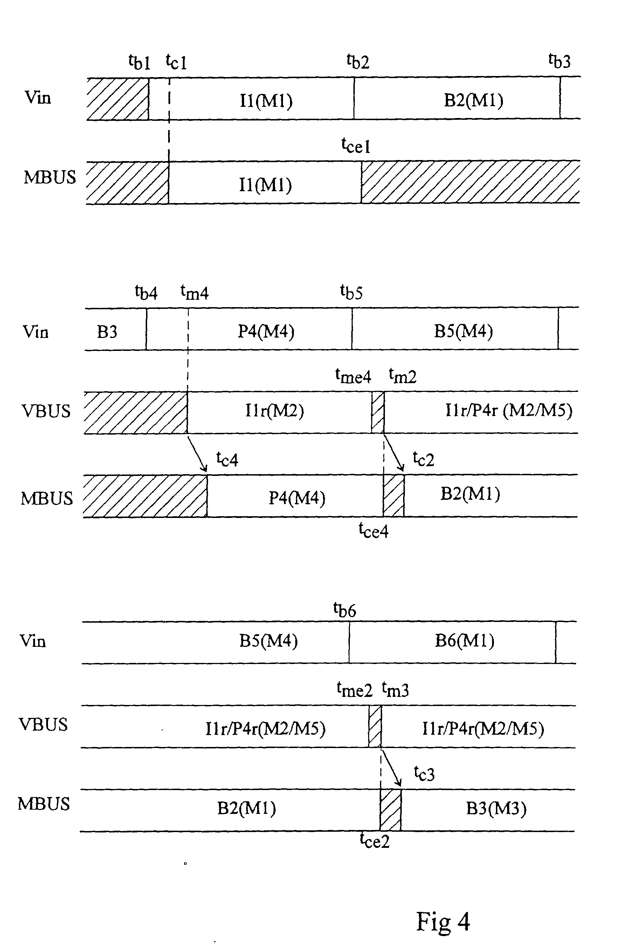

La figure 4, qui doit être observée en même temps que la figure 2, illustre le fonctionnement du circuit de compression de la figure 3 lors du traitement, à titre d'exemple, du groupe d'images I1 B2 B3 P4 B5 B6 P7... La figure 4 représente les activités sur les bus Vin, MBUS et VBUS. L'activité sur le bus Vin correspond aux images successives à traiter, l'activité sur le bus MBUS à une succession d'images à traiter par l'unité de codage 30, et l'activité sur le bus VBUS au transfert de macroblocs de référence et de fenêtres de recherche de la mémoire 34 vers l'unité d'estimation de mouvement 32.

Des instants t_{b}, déterminés par les impulsions de synchronisation verticale reçues par l'unité de codage 30, marquent le début de chaque image reçue sur le bus Vin. Des instants t_{c} marquent le début de chaque traitement d'une image par l'unité de codage 30 et des instants t_{ce} marquent les fins de ces traitements. Des instants tₘ marquent le début de l'estimation de mouvement du premier macrobloc de chaque image et des instants tₘₑ marquent la fin de l'estimation de mouvement du dernier macrobloc de chaque image. Chacun de ces instants a comme indice le numéro d'arrivée de l'image correspondante.

A chaque instant t_{b}, le microprocesseur 36 est interrompu par l'unité de codage 30. Le microprocesseur est programmé pour répondre à cette interruption par le transfert de paramètres de codage dans un registre de l'unité de codage 30.

Ces paramètres sont, notamment le type (intra, prédit, bidirectionnel) de l'image à traiter, les zones M de la mémoire où sont respectivement stockées l'image en cours de réception, l'image à coder, l'image reconstruite, et la ou les images dans lesquelles on cherche des macroblocs prédicteurs. Ainsi, dans cet exemple, le microprocesseur 36 est affecté notamment des tâches de déterminer le type de groupe d'images (IBBPBBPBB...) et de gérer l'affectation des zones de la mémoire. Ces tâches, qui sont peu lourdes à effectuer de manière logicielle, simplifient la structure de l'unité de codage 30 et rendent le circuit de compression plus souple d'utilisation.

En outre, le microprocesseur peut fournir en tant que paramètres une table de quantification (normes MPEG seulement) qui est utilisée dans les traitements de quantification et de quantification inverse (effectués par l'unité de codage 30).

Après avoir fourni ces paramètres, le microprocesseur active l'unité de codage 30 et, le cas échéant, l'unité d'estimation de mouvement 32, en validant des bits respectifs de ces unités, pour indiquer que le codage d'une nouvelle image peut commencer dès que cela est possible.

A un instant t_{b1}, commence à arriver l'image intra I1. Les paramètres fournis par le microprocesseur indiquent que l'image I1 est une image intra, qu'elle doit être stockée dans la zone M1, et qu'elle est l'image à coder. S'agissant d'une image intra, on n'utilise pas l'estimation de mouvement (l'unité d'estimation de mouvement n'est pas activée par le microprocesseur) et le codage peut commencer dès que la zone M1 contient le nombre de lignes correspondant à la hauteur d'un macrobloc.

A un instant t_{c1}, la zone M1 contient suffisamment de lignes et le codage de l'image I1 commence. Simultanément, l'image I1 est reconstruite dans une zone M2 (voir figure 2).

A un instant t_{ce1}, le codage de l'image I1 se termine. L'instant t_{ce1} peut très bien survenir après un instant t_{b2} indiquant le début de l'arrivée de l'image suivante B2.

A l'instant tb2, le microprocesseur indique à l'unité de codage 30, ici avant la fin du traitement de l'image I1, que l'image B2 est stockée dans la même zone M1 que l'image I1. Ceci n'est pas gênant car les premiers macroblocs de l'image B2 viennent alors écraser des macroblocs déjà traités de l'image I1.

La durée de codage d'une image peut varier autour de la durée d'arrivée d'une image, mais il faut qu'en moyenne la durée de codage soit inférieure ou égale à la durée d'arrivée d'une image.

L'image bidirectionnelle B2 ne peut être codée tant que l'on a pas reçu l'image prédite P4 ultérieure. Pour cela, le microprocesseur ne fournit, à l'instant t_{b2}, aucun paramètre pour indiquer la zone mémoire de l'image à coder. La seule activité sur le bus MBUS à partir de l'instant t_{ce1}, est le transfert en mémoire des images entrantes (B2, B3).

A un instant t_{b4}, on commence à recevoir l'image prédite P4 après avoir reçu l'image bidirectionnelle B3. Le microprocesseur indique, parmi les paramètres fournis à l'unité de codage 30, que cette image P4 est prédite, qu'elle est l'image à coder, et que les macroblocs prédicteurs sont à chercher dans la zone M2 (image I1r). Ensuite, le microprocesseur valide l'unité de codage 30 et l'unité d'estimation de mouvement 32. L'unité d'estimation de mouvement 32 envoie une requête à l'unité de codage 30 pour recevoir par le bus VBUS les macroblocs de référence de l'image P4 et les fenêtres de recherche correspondantes de l'image I1r. L'unité de codage 30 attend que la mémoire contienne suffisamment de lignes de l'image P4 pour pouvoir transférer le premier macrobloc de référence.

A un instant tₘ₄, la mémoire contient suffisamment de lignes de l'image P4. L'unité de codage 30 envoie à l'unité d'estimation de mouvement 32, par le bus VBUS, le premier macrobloc de l'image P4 et une fenêtre de recherche correspondante de l'image I1r.

A un instant t_{c4}, l'unité d'estimation de mouvement 32 a trouvé un macrobloc prédicteur dans l'image I1r et fournit le vecteur de mouvement correspondant à l'unité de codage 30. L'unité de codage peut alors commencer à traiter le premier macrobloc de l'image P4 en allant lire par le bus MBUS le macrobloc prédicteur à l'aide du vecteur (l'adresse du macrobloc prédicteur est calculée à partir des composantes du vecteur).

Par ailleurs, l'unité d'estimation de mouvement 32 fournit, dans l'instruction fournie à l'unité de codage 30, la décision précédemment mentionnée indiquant que le macrobloc de référence doit être traité en macrobloc prédit avec le vecteur fourni ou avec un vecteur nul, ou traité en macrobloc intra.

Tous les macroblocs de l'image P4 sont ainsi traités jusqu'à un instant tₘₑ₄ où se termine l'estimation de mouvement et à un instant t_{ce4} où se termine le codage de l'image P4.

A un instant t_{b5}, on commence à recevoir l'image bidirectionnelle B5. Le microprocesseur indique à l'unité de codage 30 que l'image B5 est bidirectionnelle, qu'elle est stockée dans la zone M4 correspondant à la zone de l'image P4 encore en cours de codage, et que l'image à coder est l'image B2.

L'estimation de mouvement se termine à un instant tₘₑ₄ ultérieur à l'instant t_{b5} et le codage de l'image P4 se termine un peu après à un instant t_{ce4}. La durée d'une estimation de mouvement peut varier autour de la durée de réception d'une image et doit être en moyenne inférieure ou égale à cette durée.

A un instant tₘ₂, coïncidant avec l'instant t_{ce4} de fin de codage de l'image P4, commence l'estimation de mouvement du premier macrobloc de l'image B2. L' estimation de mouvement peut commencer immédiatement dès la fin du codage de l'image précédente P4, car toutes les images nécessaires (B2, I1r, P4r) sont disponibles en totalité dans la mémoire. L'unité d'estimation de mouvement 32 reçoit par le bus VBUS le premier macrobloc de référence de l'image B2 ainsi que deux fenêtres correspondantes cherchées respectivement dans l'image I1r et dans l'image P4r.

A un instant t_{c2}, l'unité d'estimation de mouvement trouve un macrobloc prédicteur dans chacune des deux fenêtres et fournit deux vecteurs de mouvement correspondants à l'unité de codage 30. Immédiatement, l'unité de codage 30 traite le premier macrobloc de l'image B2. L'unité d'estimation de mouvement 32 indique à l'unité de codage 30, pour chacun des deux macroblocs prédicteurs, qu'il faut utiliser le vecteur fourni ou un vecteur nul, ou bien que le macrobloc de référence doit être traité en macrobloc intra, selon la solution qui est susceptible de fournir le meilleur taux de compression.

Tous les macroblocs de l'image B2 sont ainsi traités jusqu'à un instant tₘₑ₂ où se termine l'estimation de mouvement et à un instant t_{ce2} où se termine le codage de l'image B2.

A un instant t_{b6} antérieur à l'instant tₘₑ₂, on commence à recevoir l'image bidirectionnelle B6 que l'on stocke dans la zone M1 où était stockée l'image B2. Le microprocesseur indique à l'unité de codage 30 que l'image bidirectionnelle B3 est celle qu'il faut coder. L'image bidirectionnelle B3 est traitée de la même manière que l'image bidirectionnelle B2, l'estimation de mouvement commençant à un instant tₘ₃ coïncidant avec l'instant t_{ce2} et le codage commençant à un instant t_{c3} quelque temps après l'instant t_{ce2}.

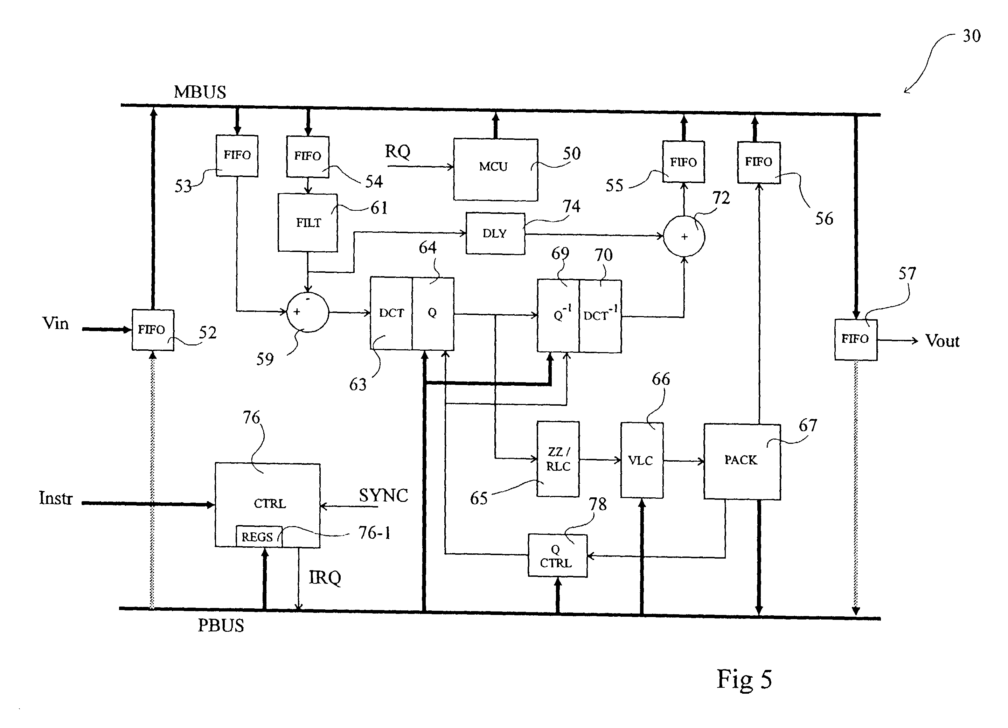

La figure 5 représente un mode de réalisation d'une unité de codage 30 selon l'invention. L'élément principal de cette unité de codage est un contrôleur mémoire 50 qui gère tous les accès à la mémoire vidéo 34. En fait, le contrôleur mémoire 50 est un processeur multi-tâches, chaque tâche consistant en un transfert de données entre la mémoire vidéo 34 et un élément du circuit de compression. En particulier, le contrôleur mémoire 50 gère les transferts de données entre la mémoire et différents éléments internes de l'unité de codage 30. Ces éléments internes sont reliés au bus MBUS par des mémoires tampon respectives, de type premier entré - premier sorti (FIFO).

Une mémoire FIFO 52 reçoit les données des images à comprimer par le bus Vin et fournit ces données sur le bus MBUS. Une mémoire FIFO 53 reçoit par le bus MBUS les macroblocs successifs de l'image en cours de codage. Une mémoire FIFO 54 reçoit par le bus MBUS les macroblocs prédicteurs. Une mémoire FIFO 55 fournit sur le bus MBUS les macroblocs reconstruits. Une mémoire FIFO 56 fournit sur le bus MBUS les données comprimées. Enfin, une mémoire FIFO 57 reçoit par le bus MBUS les données comprimées pour les fournir de façon sérielle sur la ligne Vout.

Les tâches que doit effectuer le contrôleur mémoire 50 consistent essentiellement à transférer les données des mémoires FIFO 52, 55 et 56 dans des zones correspondantes de la mémoire 34 et à transférer dans les mémoires FIFO 53, 54 et 57 les données de zones correspondantes de la mémoire 34. Chacune des mémoires FIFO 52, 55 et 56 émet une requête vers le contrôleur mémoire 50 dès que son niveau de remplissage est supérieur à une limite prédéterminée, par exemple la moitié de sa capacité. Chacune des mémoires FIFO 53, 54 et 57 émet une requête vers le contrôleur mémoire 50 dès que son niveau de remplissage est inférieur à un niveau prédéterminé, par exemple la moitié de sa capacité. Comme on l'a précédemment mentionné, l'unité d'estimation de mouvement 32 émet une requête RQ lorsqu'elle a besoin de recevoir un macrobloc de référence et une fenêtre de recherche correspondante. Cette requête est fournie au contrôleur mémoire 50 qui gère aussi le transfert de données par le bus VBUS de la mémoire 34 vers l'unité d'estimation de mouvement.

Toutes ces requêtes sont affectées de niveaux de priorité différents, de manière à assurer la réception par le bus Vin d'un flot continu de données et la fourniture sur la ligne Vout d'un flot continu de bits.

Un soustracteur 59 reçoit les macroblocs à coder de la mémoire FIFO 53 et les macroblocs prédicteurs à soustraire de la mémoire FIFO 54 par l'intermédiaire d'un filtre 61. La sortie du soustracteur 59 est traitée par un circuit de transformée cosinus discrète (DCT) 63 et un circuit de quantification 64. La sortie du circuit de quantification 64 est traitée par un circuit de balayage zig-zag et de codage de chaînes de zéros 65, un circuit de codage à longueur variable (VLC) 66 et un circuit de compactage 67. Le circuit de compactage 67 fournit les données comprimées.

Le circuit VLC fournit des codes sur un premier bus. Comme ces codes sont de longueur variable (1 à 16 bits, par exemple), le circuit VLC fournit aussi la longueur de chaque code sur un deuxième bus. Le rôle du circuit de compactage 67 est de juxtaposer les codes successifs en supprimant les bits inutilisés du premier bus du circuit VLC.

Comme on l'a précédemment indiqué, le circuit VLC reçoit des informations qui doivent être insérées dans des en-têtes. Ces informations subissent également un codage à longueur variable.

Chaque macrobloc comprimé est précédé d'un en-tête qui comporte notamment le type du macrobloc (intra, prédit ou bidirectionnel, utilisant un vecteur nul ou non), les vecteurs de mouvement, le coefficient de quantification, et le fait qu'un macrobloc prédicteur est filtré ou non (norme H261).

Une image comprimée est précédée d'un en-tête qui comporte notamment le type de l'image.

Il existe également un en-tête par tranche d'image qui comporte notamment les coordonnées du premier macrobloc de la tranche pour permettre au décodeur de se rattraper s'il a perdu des informations.

Il existe d'autres en-têtes, à savoir les en-têtes précédant des groupes d'images comprimées et des en-têtes précédant des séquences d'images comprimées. Les en-têtes de groupe d'images comportent notamment le type de suite des images du groupe, par exemple IBBPBBP... ainsi que la fréquence des images intra dans le groupe. Les en-têtes de séquence comportent notamment des tables de quantification à utiliser pour des images intra et non-intra et la taille des images.

Les informations pour constituer les en-têtes de macrobloc et de tranche d'image sont générées de façon interne au circuit de compression et fournies au circuit VLC 66 qui affecte à ces informations des codes de longueur variable.

Selon un aspect de l'invention, les en-têtes d'image, de groupe d'images et de séquence sont déterminés et codés par le microprocesseur, et fournis au circuit VLC 66 par le bus PBUS. Cette partition des tâches de génération d'en-têtes permet de rendre le système plus souple car les informations des en-têtes d'image, de groupe d'images et de séquence sont susceptibles de subir des modifications au cours de l'évolution des normes. Ainsi, si une évolution importante se produit, il suffira de changer le programme du microprocesseur sans modifier le circuit de compression.

Dans ce mode de réalisation, on utilise une zone de la mémoire 34 comme zone tampon pour assurer un flot continu de bits sur la ligne Vout. Pour cela, la sortie du circuit de compactage 67 est reliée au bus MBUS par l'intermédiaire de la mémoire FIFO 56 de manière à pouvoir stocker les données comprimées en attente dans la mémoire 34, avant de les envoyer sur la ligne Vout par l'intermédiaire de la mémoire FIFO 57.

Pour effectuer la reconstruction des macroblocs de référence, la sortie du circuit de quantification 64 est traitée par un circuit de quantification inverse 69 et un circuit de transformée cosinus discrète inverse 70. Un additionneur 72 reçoit la sortie du circuit 70 et la sortie du filtre 61 par l'intermédiaire d'un circuit de retard 74. Le circuit de retard 74 introduit un retard correspondant au retard subi par les données traitées par les circuits 63, 64, 69 et 70. La sortie de l'additionneur 72 correspond aux macroblocs reconstruits qui sont fournis sur le bus MBUS par l'intermédiaire de la mémoire FIFO 55.

L'ensemble des circuits 59 à 74 constitue ce que l'on appelle classiquement un circuit "pipe-line".

Un circuit de commande 76 de l'unité de codage est relié au bus de microprocesseur PBUS. Ce circuit de commande comprend les registres 76-1 susmentionnés permettant au microprocesseur de fournir à l'unité de codage divers paramètres tels que les emplacements des zones mémoire des différentes images nécessaires au codage. Ce registre comprend également un bit de validation de l'unité de codage permettant au microprocesseur d'initialiser le codage d'une image. Le circuit de commande 76 reçoit les signaux SYNC de synchronisation d'image et émet une requête d'interruption IRQ vers le microprocesseur à chaque début de réception d'une image à comprimer. Le circuit de commande 76 reçoit également les instructions provenant de l'unité d'estimation de mouvement 32, ces instructions indiquant le type du macrobloc de référence, le vecteur de mouvement correspondant et, pour les normes H261 seulement, un bit indiquant que le macrobloc prédicteur déterminé par le vecteur doit ou non subir un filtrage. Ce bit active ou non le filtre 61.

Les emplacements des diverses images nécessaires au codage, contenus dans les registres 76-1, ainsi que les vecteurs de mouvement, sont fournis au contrôleur mémoire 50 qui peut alors calculer les adresses des données à transférer entre la mémoire 34 et les mémoires FIFO.

Les circuits de quantification 64 et de quantification inverse 69 sont reliés au bus PBUS pour recevoir du microprocesseur, dans le cadre des normes MPEG, les tables de quantification. En outre, les coefficients de quantification des circuits 64 et 69 sont déterminés par un circuit de commande de quantification 78 dont le rôle est d'ajuster le coefficient de quantification en fonction de l'écart entre un taux de compression obtenu et un taux de compression moyen souhaité. Cet écart est donné par le circuit de compactage 67 qui compte, pour chaque macrobloc, le nombre de bits fournis par le circuit de codage à longueur variable 66.

Une approche pour ajuster le coefficient de quantification pourrait consister à comparer le nombre de bits de chaque macrobloc comprimé à un nombre de bits moyen et, en fonction du résultat, modifier le coefficient de quantification pour le macrobloc suivant de manière à réduire l'écart ou obtenir un écart moyen nul.

Une approche plus fine, qui est particulièrement facile à prévoir dans une architecture selon l'invention, consiste à effectuer un codage de chaque image en deux passes. Le mode de codage est, par exemple, sélectionné par le microprocesseur qui valide un bit dédié du circuit de commande 76.

Lors de la première passe de codage d'une image, les macroblocs ne sont pas reconstruits et le circuit de compactage 67 ne fournit pas de données comprimées mais compte le nombre de bits de chaque macrobloc comprimé et fournit les nombres au microprocesseur. Le microprocesseur utilise alors ces nombres pour déterminer des coefficients de correction de quantification à associer à chaque macrobloc ou groupe de macroblocs. De façon schématique, le coefficient de quantification est augmenté lorsqu'un macrobloc comprimé comporte un nombre de bits élevé, et diminué lorsque le macrobloc comprimé comporte un nombre de bits faible. Cette approche permet d'obtenir une qualité sensiblement constante ainsi qu'un taux de compression sensiblement constant. Ces deux résultats ne sont pas incompatibles car plus une partie d'image est complexe, plus elle peut être quantifiée sans dégradation perceptible de la qualité.

Lors de la deuxième passe, le coefficient de quantification est multiplié à chaque macrobloc ou groupe de macroblocs par le coefficient de correction correspondant, fourni par le microprocesseur au circuit de commande de quantification 78.

Comme cela est représenté par des bus en pointillés, la mémoire FIFO 52 peut recevoir des données du bus PBUS et la mémoire FIFO 57 peut fournir des données au bus PBUS. Ceci permet au microprocesseur de fournir des images à comprimer ainsi que de recevoir des images comprimées.

## Revendications

1. Circuit de compression d'image comprenant :
- une mémoire vidéo (34) susceptible de stocker un nombre prédéterminé d'images, les cases de cette mémoire étant accessibles de façon séquentielle par un bus vidéo (VBUS) et de façon aléatoire par un bus mémoire (MBUS) ;
- une unité de codage (30) reliée à la mémoire vidéo par le bus mémoire pour stocker dans la mémoire une image reçue sur une entrée (Vin) de l'unité de codage, lire dans la mémoire l'image par macroblocs afin de faire subir à ces macroblocs un traitement de transformée cosinus discrète (DCT), de quantification (Q) et de codage à longueur variable (VLC), et pour lire dans la mémoire des macroblocs prédicteurs d'une autre image et soustraire ces macroblocs prédicteurs aux macroblocs en cours de traitement ; et
- une unité d'estimation de mouvement (32) susceptible d'être connectée au bus vidéo et à l'unité de codage, pour recevoir par le bus vidéo un macrobloc en cours de traitement par l'unité de codage et une fenêtre entourant ce macrobloc dans une autre image, de manière à rechercher dans la fenêtre un macrobloc prédicteur le plus proche possible du macrobloc en cours de traitement, la différence de position entre le macrobloc prédicteur et le macrobloc en cours de traitement étant fournie comme vecteur d'estimation de mouvement (V) à l'unité de codage pour indiquer l'emplacement du macrobloc prédicteur dans la mémoire.

2. Circuit de compression d'image selon la revendication 1, **caractérisé en ce que** l'unité de codage (30) reçoit un signal de synchronisation d'image (SYNC) et est reliée à un microprocesseur (36) interrompu par l'unité de codage à chaque arrivée d'une image indiquée par le signal de synchronisation, le microprocesseur étant programmé pour répondre à chaque interruption par la fourniture à l'unité de codage d'informations indiquant les zones de la mémoire (34) où se trouvent respectivement l'image en cours de réception, l'image en cours de traitement et l'image où sont cherchés les macroblocs prédicteurs, et indiquant le départ du codage d'une nouvelle image.

3. Circuit de compression d'image selon la revendication 2, **caractérisé en ce que** le microprocesseur (36) est programmé pour répondre aux interruptions de l'unité de codage (30) en fournissant à l'unité de codage le type de l'image à traiter.

4. Circuit de compression d'image selon la revendication 1, **caractérisé en ce que** l'unité d'estimation de mouvement (32) fournit à l'unité de codage (30) une décision indiquant si le macrobloc en cours de traitement doit ou non être traité par soustraction d'un macrobloc prédicteur et si le vecteur de mouvement doit ou non être utilisé.

5. Circuit de compression d'image selon la revendication 4, **caractérisé en ce que** l'unité d'estimation de mouvement (32) est reliée au microprocesseur (36) pour recevoir de celui-ci des critères permettant d'établir les conditions dans lesquelles ladite décision est fournie par l'unité d'estimation de mouvement à l'unité de codage.

## Patentansprüche

1. Eine Bildkompressionsschaltung, die Folgendes aufweist:
- einen Videospeicher (34), der in der Lage ist, eine vorbestimmte Anzahl von Bildern zu speichern, wobei die Zellen dieses Speichers sequentiell durch einen Videobus (VBUS) und zufallsmäßig durch einen Speicherbus (MBUS) zugreifbar sind;
- eine Kodiereinheit (30) verbunden mit dem Videospeicher, durch den Speicherbus zum Speichern eines an einem Eingang (Vin) der Kodiereinheit empfangenen Bildes, zum Einlesen des Bildes in dem Speicher durch Makrosblocks, um die Makroblocks einer diskreten Kosinus Transformation (DCT), auszusetzen, einer Quantifizierung (Q) und einer variablen Längenkodierung (VLC), und um in den Speicher Predictor- oder Vorhersage-Makroblocks von einem anderen Bild einzulesen Grund, und um die Predictor-Makroblocks von den laufend verarbeitenden Makroblocks abzuziehen; und
- eine Bewegungsschätzeinheit (32), die mit dem Videobus und mit der Kodiereinheit verbunden werden kann, um durch den Videobus einen derzeit durch die Kodiereinheit verarbeiteten Makroblock zu empfangen und ferner ein den erwähnten Makroblock in einem weiteren Bild umgebenes Fenster, um in dem Fenster nach einem Predictor-Makroblock zu suchen, der der nächstmögliche zu dem derzeit verarbeitenden Makroblock ist, wobei die Positionsdifferenz zwischen dem Predictor-Makroblock und dem derzeit verarbeitenden Makroblock als ein Bewegungsschätzungsvektor (V) zu der Kodiereinheit geliefert wird, um die Position des Predictor-Makroblocks im Speicher anzuzeigen.

2. Bildkompressionsschaltung nach Anspruch 1, wobei die Kodiereinheit (30) ein Bildsynchronisationssignal (SYNC) empfängt und mit einem Mikroprozessor (36) unterbrochen durch die Kodiereinheit bei jeder Ankunft eines durch das Synchronisationssignal angezeigten Bildes verbunden ist, wobei der Mikroprozessor derart programmiert ist, dass er auch jede Unterbrechung anspricht und zwar durch beliefern der Kodiereinheit mit Daten, die Speicherflächen (34) angeben in denen das derzeit empfangene Bild, das derzeit verarbeitete Bild und das Bild sich befinden, wo die Predictor-Makroblocks gesucht werden, und anzeigen des Beginns des Kodierens eines neuen Bildes.

3. Bildkompressionsschaltung nach Anspruch 2, wobei der Mikroprozessor (36) derart programmiert ist, dass er auf die Unterbrechungen der Kodiereinheit (30) dadurch anspricht, dass er sie mit dem Typ des zu verarbeitenden Bildes beliefert.

4. Bildkompressionsschaltung nach Anspruch 1, wobei die Bewegungsschätzeinheit (32), die für die Einheit (30) mit einer Entscheidung beliefert, die anzeigt, ob der derzeit verarbeitende Makroblock durch subtrahieren eines Predictor-Makroblocks verarbeitet werden muss und ob der Bewegungsvektor verwendet werden muss.

5. Bildkompressionsschaltung nach Anspruch 4, wobei die Bewegungsschätzeinheit (32) mit dem Mikroprozessor (36) verbunden ist, um von diesen Kriterien zu empfangen die gestatten, dass die Bedingungen festgelegt werden können unter denen die erwähnte Entscheidung durch die Bewegungsschätzeinheit an die Kodiereinheit geliefert wird.

## Claims

1. A picture compression circuit including:
- a video memory (34) capable of storing a predetermined number of pictures, the cells of this memory being sequentially accessible through a video bus (VBUS) and randomly accessible through a memory bus (MBUS);
- an encoding unit (30) connected to the video memory through the memory bus to store in the memory a picture received at an input (Vin), of the encoding unit, to read in the memory the picture by macroblocks to subject said macroblocks to a discrete cosine transform (DCT), a quantification (Q) and a variable length coding (VLC), and to read in the memory predictor macroblocks of another picture and to subtract said predictor macroblocks from the currently processed macroblocks; and
- a motion estimation unit (32) that can be connected to the video bus and to the encoding unit, to receive through the video bus a macroblock currently processed by the encoding unit and a window surrounding said macroblock in another picture, in order to search in the window a predictor macroblock that is the nearest possible to the currently processed macroblock, the difference of position between the predictor macroblock and the currently processed macroblock being provided as a motion estimation vector (V) to the encoding unit to indicate the position of the predictor macroblock in the memory.

2. The picture compression circuit of claim 1, wherein the encoding unit (30) receives a picture synchronization signal (SYNC) and is connected to a microprocessor (36) interrupted by the encoding unit at each arrival of a picture indicated by the synchronization signal, the microprocessor being programmed to respond to each interrupt by providing the encoding unit with data indicating the memory areas (34) in which are the currently received picture, the currently processed picture, and the picture where predictor macroblocks are searched for, and indicating the beginning of encoding of a new picture.

3. The picture compression circuit of claim 2, wherein the microprocessor (36) is programmed to respond to the interrupts of the encoding unit (30) by providing it with the type of the picture to process.

4. The picture compression circuit of claim 1, wherein the motion estimation unit (32) provides to the encoding unit (30) with a decision indicating whether the currently processed macroblock has to be processed by subtracting a predictor macroblock and whether the motion vector must be used.

5. The picture compression circuit of claim 4, wherein the motion estimation unit (32) is connected to the microprocessor (36) in order to receive therefrom criteria allowing to establish the conditions under which said decision is provided by the motion estimation unit to the encoding unit.
